# EUROPÄISCHE PATENTANMELDUNG

(11) **EP 4 625 805 A1**
(43) Veröffentlichungstag der Anmeldung: **01.10.2025**
(21) Anmeldenummer: 24166891.2
(22) Anmeldetag: 27.03.2024
(51) Int. Cl.: H02M 7/66, H02P 1/02

(54) **STROMRICHTER ZUM ANSCHLUSS AN EIN GLEICHSPANNUNGS-NETZWERK**

(71) Anmelder: Siemens Aktiengesellschaft, 80333 München (DE)
(72) Erfinder: Kopf, Michael, 90537 Feucht (DE); Krupp, Henrik, 91056 Erlangen (DE); Schulz, Matthias, 81825 München (DE)
(74) Vertreter: Siemens Patent Attorneys

(57) **Zusammenfassung**

Ein Wechselrichter zum Anschluss an ein DC-Versorgungsnetz umfasst eine Schmelzsicherung sowie seriell dazu einen steuerbaren Trennschalter, wobei eine Steuerung ausgestaltet ist, den Trennschalter abzuschalten, wenn der Stromfluss durch den Trennschalter in Richtung zum DC-Versorgungsnetz einen Schwellwert überschreitet.

## Beschreibung

Die Erfindung betrifft einen Stromrichter zur Wandlung zwischen einer an Gleichspannungsanschlüssen anliegenden Gleichspannung und einer an Wechselspannungsanschlüssen anliegenden Wechselspannung, umfassend eine Eingangsschaltung mit einem oder mehreren Kondensatoren und eine parallel zur Eingangsschaltung angeordnete Wechselrichter-Schaltung mit einer Mehrzahl von steuerbaren Leistungshalbleiterschaltern.

Die Versorgung von mehrphasigen elektrischen Lasten wie beispielsweise Elektromotoren in industriellen Umgebungen erfolgt häufig über Stromrichter, die eine dreiphasige Versorgungsspannung aus einem dreiphasigen Wechselspannungs-Versorgungsnetz in eine veränderte dreiphasige Wechselspannung wandeln. Es handelt sich bei solchen Stromrichtern also um AC/AC-Umrichter.

Alternative industrielle Umgebungen verwenden ein Versorgungsnetz, das ein Gleichspannungs-Netzwerk ist. Dieses Gleichspannungs-Netzwerk hat beispielsweise einen Nennspannungsbereich zwischen 400 V und 800 V. Für solche Umgebungen können Stromrichter verwendet werden, die eine Wandlung zwischen der Gleichspannung und einer in der Last benötigten, insbesondere dreiphasigen, Wechselspannung vornehmen, also Wechselrichter.

Die Absicherung eines solchen Wechselrichters kann mit einer Schmelzsicherung erfolgen, die im Fehlerfall den Stromfluss unterbricht. Tritt ein Fehlerfall in einem Sektor des Gleichspannungs-Netzwerks auf, in dem mehrere solche Wechselrichter angeschlossen sind, und tritt der Fehler bei einem der leistungsstärkeren der Wechselrichter auf, dann würde dieser die Spannung an den Eingangskondensatoren der anderen angeschlossenen Wechselrichter ebenfalls belasten, um seinen Kurzschlussstrom zu erhalten. Dadurch können nachteilig die Schmelzsicherungen von leistungsschwächeren der Wechselrichter ausgelöst werden. Diese müssten dann ausgetauscht werden, obwohl diese Geräte gar nicht für den Fehlerfall verantwortlich sind.

Es ist Aufgabe der Erfindung, ein Stromrichter zur Wandlung zwischen einer an Gleichspannungsanschlüssen anliegenden Gleichspannung und einer an Wechselspannungsanschlüssen anliegenden Wechselspannung anzugeben, mit dem das eingangs genannte Problem vermieden wird. Eine weitere Aufgabe der Erfindung besteht darin, ein Betriebsverfahren für einen solchen Stromrichter anzugeben.

Diese Aufgabe wird durch einen Stromrichter mit den in Anspruch 1 angegebenen Merkmalen gelöst. Eine weitere Lösung besteht in dem Betriebsverfahren mit den in Anspruch 9 angegebenen Merkmalen.

Der erfindungsgemäße Stromrichter ist ausgestaltet zur Wandlung zwischen einer an Gleichspannungsanschlüssen anliegenden Gleichspannung und einer an Wechselspannungsanschlüssen anliegenden Wechselspannung. Die Wechselspannung ist dabei eine ein- oder mehrphasige, insbesondere eine dreiphasige Wechselspannung.

Der Stromrichter umfasst eine Eingangsschaltung mit einem oder mehreren Eingangs-Kondensatoren und eine parallel zur Eingangsschaltung angeordnete Wechselrichter-Schaltung mit einer Mehrzahl von steuerbaren Leistungshalbleiterschaltern. Es versteht sich, dass die Wechselrichter-Schaltung bezüglich ihrer Gleichspannungsanschlüsse parallel zur Eingangsschaltung geschaltet ist. Die Eingangsschaltung entspricht einem Gleichspannungs-Zwischenkreis eines AC/AC-Umrichters, ihr ist aber kein Gleichrichter vorgeschaltet.

Die Wechselrichter-Schaltung ist ausgangsseitig mit den Wechselspannungsanschlüssen gekoppelt, während die Anschlüsse der Eingangsschaltung mit den Gleichspannungsanschlüssen gekoppelt sind.

Weiterhin ist eine Schutzschaltung mit einer Schmelzsicherung zwischen den positiven Pol der Eingangsschaltung und den positiven Gleichspannungsanschluss geschaltet. Die Schutzschaltung weist in Serie zur Schmelzsicherung ein Trennschalter auf, der einen steuerbaren Leistungshalbleiterschalter umfasst oder durch einen solchen gebildet ist. Der steuerbare Leistungshalbleiterschalter ist zweckmäßig ein unidirektionaler Schalter mit einer parallel zum Schalter vorliegenden intrinsischen oder als eigenes Bauteil ausgeführten Diode.

Bei dem erfindungsgemäßen Betriebsverfahren für einen solchen Stromrichter wird der Trennschalter dauerhaft eingeschaltet und dann abgeschaltet, wenn ein von der Eingangsschaltung zum Gleichspannungsanschluss fließender Strom einen Schwellwert überschreitet.

Für die Erfindung wurde erkannt, dass das Problem bei AC/AC-Umrichtern nicht auftritt, da dort die Zwischenkreiskondensatoren nur über einen Gleichrichter an das Versorgungsnetzwerk angeschlossen sind und dessen Dioden eine Stromumkehr verhindern. Somit verhindert der Aufbau ein direktes Entladen der Zwischenkreiskondensatoren bei einem Fehler in einem anderen an das Versorgungsnetzwerk angeschlossenen AC/AC-Frequenzumrichter.

Durch die erfindungsgemäße Ausgestaltung kann bei geeigneter Schaltung des Trennschalters ein Auslösen der Schmelzsicherung verhindert werden, wenn ein Fehler außerhalb des Stromrichters vorliegt und daher eine angeschlossene Versorgungsspannung so stark abfällt, dass ein Stromrückfluss aus den Eingangs-Kondensatoren in das Gleichspannungs-Netzwerk ein Auslösen der Schmelzsicherung bewirken könnte.

Mit der Bezeichnung "außerhalb" ist dabei ein Fehlerort gemeint, der nicht im Stromrichter selbst und auch nicht in seiner Last vorliegt, sondern im Versorgungsnetzwerk oder dort angeschlossenen Geräten.

Vorteilhaft entspricht der Stromrichter dadurch der Geräteklasse 2, gemäß der ein Gerät bei einem Kurzschluss im gleichen Sektor des Gleichspannungs-Netzwerks keinen Schaden nehmen darf, wozu auch das Auslösen der Schmelzsicherung zählt.

Bei einem baulichen Vergleich zwischen einem AC/AC-Umrichter und dem vorliegenden DC/AC-Stromrichter entfällt eine im AC/AC-Umrichter nötige Drossel im Zwischenkreis, deren freiwerdender Bauraum vorteilhaft zur Aufnahme der Schmelzsicherung und des Trennschalters verwendet werden kann.

Vorteilhafte Ausgestaltungen des erfindungsgemäßen Stromrichters gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen werden:
Der negative Pol der Eingangsschaltung kann den negativen Gleichspannungsanschluss bilden. Es ist auch möglich, dass eine weitere Schmelzsicherung zwischen den negativen Pol der Eingangsschaltung und den negativen Gleichspannungsanschluss geschaltet ist.

Die Schutzschaltung umfasst bevorzugt eine Steuerung für den Trennschalter. Die Steuerung kann Teil einer Steuerung für den gesamten Stromrichter sein, die beispielsweise auch Schalter der Wechselrichterschaltung steuert. Die Steuerung ist dazu zweckmäßig über Treiber-Schaltungen mit den Steueranschlüssen der gesteuerten Leistungshalbleiterschalter verbunden.

Die Steuerung ist zweckmäßig ausgestaltet, den Trennschalter abzuschalten, wenn ein von der Eingangsschaltung zum Gleichspannungsanschluss fließender Strom einen Schwellwert überschreitet. Der hier betrachtete Strom fließt mit anderen Worten durch die Schmelzsicherung und durch den Trennschalter und in Richtung aus dem Stromrichter heraus in Richtung des Versorgungsnetzwerks, also nicht in Richtung zu einer angeschlossenen Last wie einem Elektromotor. Da die Richtung des Stroms betrachtet wird, versteht es sich, dass der Vergleich mit dem Schwellwert unter Berücksichtigung der Vorzeichen passiert und das Überschreiten dem Betrag nach betrachtet wird.

Vorteilhaft ist der Schwellwert dabei so bemessen, dass die Abschaltung passiert, bevor die Schmelzsicherung anspricht und den Strom ihrerseits unterbricht. Durch diese Ausgestaltung der Steuerung wird erreicht, dass die Schmelzsicherung vor einem Auslösen bewahrt wird, das durch einen außerhalb ihres eigenen Stromrichters liegenden Fehler bewirkt wird. Die Schmelzsicherung reagiert damit mit anderen Worten bevorzugt nur noch auf einen Stromfluss in den Stromrichter hinein, also auf einen Fehler im Stromrichter selbst.

Wiederum bezeichnet "außerhalb" dabei einen Fehlerort, der nicht im Stromrichter selbst und auch nicht in seiner Last vorliegt, sondern im Versorgungsnetzwerk oder dort angeschlossenen anderen Geräten.

Bei einem Stromfluss in die Richtung, die einem Leistungsfluss zur Last des Stromrichters entspricht, also aus dem Gleichspannungs-Netzwerk in den Stromrichter, wird der Trennschalter nicht abgeschaltet, auch wenn der Strom dem Betrag nach den Schwellwert überschreitet. Zum einen wird diese Stromrichtung für den Betrieb des Trennschalters nicht beachtet, da hier die Schmelzsicherung ansprechen soll, zum anderen hätte ein Abschalten des Trennschalters in diesem Fall auch keine Wirkung, da seine Rückwärtsdiode die Stromleitung übernehmen würde.

Die Steuerung kann weiterhin ausgestaltet sein, den Trennschalter im normalen Betrieb des Stromrichters im eingeschalteten Zustand zu belassen. Im normalen Betrieb überschreitet der durch den Trennschalter fließende Strom nicht den Schwellwert. Ein Normalbetrieb liegt vor, wenn die Spannung in der Eingangsschaltung annähernd gleich der Spannung des Gleichspannungs-Netzwerks ist und die Spannung in der Eingangsschaltung in einem erlaubten Spannungsbereich für den jeweiligen Stromrichter liegt, beispielsweise zwischen 450 V und 600 V.

Vorteilhaft wird durch ein dauerhaftes Einschalten des Trennschalters erreicht, dass der Serienwiderstand für Speisestrom, also einen Leistungsfluss zur angeschlossenen Last des Stromrichters, verringert wird gegenüber dem Widerstand, den die Rückwärtsdiode des Trennschalters alleine bieten würde. Dadurch werden die Verluste verringert gegenüber einem Betrieb mit abgeschaltetem Trennschalter. Weiterhin erlaubt ein dauerhaft eingeschalteter Trennschalter eine Rückspeisung von überschüssiger Energie aus der Last in das Gleichspannungs-Netzwerk, beispielsweise bei einem Bremsvorgang eines angeschlossenen Motors, ohne dass eine explizite Schalthandlung des Trennschalters nötig ist.

Die Steuerung kann weiterhin ausgestaltet sein, den Trennschalter im Betrieb des Stromrichters abzuschalten, wenn eine Vorladung der Kondensatoren der Eingangsschaltung stattfindet.

Die Steuerung kann also insgesamt ausgestaltet sein, den Trennschalter für die Vorladung und im Falle eines Stroms zum Gleichspannungs-Netzwerk, der den Schwellwert überschreitet, abzuschalten und in anderen Betriebszuständen eingeschaltet zu lassen.

Zweckmäßig umfasst der Stromrichter eine Einrichtung zur Bestimmung des Stroms durch den Trennschalter, beispielsweise Spannungsmess-Einrichtung, wobei die Spannungsmess-Einrichtung derart angeordnet ist, dass ein Spannungsabfall über den Trennschalter ermittelt wird. Die Spannungsmess-Einrichtung verwendet damit den Durchlasswiderstand des Trennschalters zur Strommessung. Die ermittelte Spannung ist im Wesentlichen proportional zur Größe des zu ermittelnden Stroms. Zweckmäßig wird dabei auch die Stromrichtung mit erfasst anhand des Vorzeichens der sich ergebenden Spannung.

Der Stromrichter kann vorteilhaft weitere Spannungsmess-Einrichtungen umfassen, beispielsweise zur Bestimmung der Spannung über die Eingangskondensatoren und/oder zur Bestimmung der Spannung im Gleichspannungs-Netzwerk.

Der Stromrichter weist in einer bevorzugten Ausgestaltung der Erfindung eine Überspannungs-Schutzeinrichtung für den Trennschalter auf. Diese kann beispielsweise eine parallel zum Trennschalter angeordnete TVS-Diode oder ein parallel zum Trennschalter angeordneter Varistor sein. Dadurch wird der Trennschalter gegen eine Zerstörung durch Überspannung geschützt. Überspannungen können dynamisch auftreten, wenn der Trennschalter abgeschaltet wird, da induktiv gespeicherte Energie zu beiden Seiten des Trennschalters kurzfristig nach der Abschaltung den unterbrochenen Strom weitertreibt. Dadurch kann die Spannung über den Trennschalter über die statische vorhandene Spannungsdifferenz ansteigen. Die Überspannungs-Schutzeinrichtung begrenzt diese Spannung, indem sie beispielsweise bei Überschreiten einer Spannungsschwelle leitend wird. Die Überspannungs-Schutzeinrichtung kann auch einen Kondensator zur Spannungsbegrenzung umfassen.

Der Stromrichter umfasst in einer weiteren bevorzugten Ausgestaltung der Erfindung eine Entladeschaltung, die parallel zur Eingangsschaltung geschaltet ist. Die Entladeschaltung umfasst einen steuerbaren Leistungshalbleiterschalter in Serie zu einem Entladewiderstand. Parallel zum Entladewiderstand kann eine Diode vorhanden sein. Die Entladeschaltung ermöglicht eine Wandlung von lastseitig vorliegender überschüssiger Energie in Wärme, also beispielsweise die Umsetzung der Energie in einem angeschlossenen Elektromotor, wenn dieser gebremst wird.

Der Stromrichter erlaubt prinzipiell eine Rückspeisung von derart anfallender überschüssiger Energie in das Gleichspannungs-Netzwerk. Ist aber der Trennschalter abgeschaltet, um die Schmelzsicherung zu schützen, liegt also ein Fehlerfall im Gleichspannungs-Netzwerk vor, dann kann auch keine Rückspeisung von überschüssiger Energie vorgenommen werden. Um in einem solchen Fall einen Spannungsaufbau in der Eingangsschaltung zu begrenzen, kann der steuerbare Leistungshalbleiterschalter eingeschaltet oder getaktet eingeschaltet werden und somit ein Stromfluss durch den Entladewiderstand ermöglicht werden, wodurch überschüssige Energie in Wärme umgesetzt wird.

Die Wechselrichter-Schaltung ist zweckmäßig eine Schaltung zur Wandlung der an der Eingangsschaltung anliegenden Gleichspannung in eine dreiphasige Wechselspannung. Hierzu können bekannte Schaltungen verwendet werden. Beispielsweise kann die Wechselrichter-Schaltung drei parallel geschaltete Halbbrücken mit jeweils zwei in Serie geschalteten Leistungshalbleiterschaltern umfassen. Die Leistungshalbleiterschalter können beispielsweise IGBTs oder MOSFETs sein. Alternativ können auch andere Wechselrichter-Schaltungen, beispielsweise solche mit mehr als zwei Spannungsniveaus eingesetzt werden.

Alternativ kann die Wechselspannung auch eine einphasige Wechselspannung sein und die Wechselrichterschaltung eine entsprechende Schaltung, beispielsweise mit zwei parallel geschalteten Halbbrücken.

Die Wechselrichter-Schaltung wird als solche bezeichnet, ist aber zweckmäßig bidirektional und somit auch rückspeisefähig, wobei sie dann als Gleichrichter arbeitet.

Nach einer Abschaltung des Trennschalters oder einem Auslösen der Schmelzsicherung ist es zweckmäßig, anschließend die interne Spannung an der Eingangsschaltung an die Spannung des Gleichspannungs-Netzwerks anzupassen. Dazu werden die Eingangskondensatoren entladen, bevor ein erneutes aktives Zuschalten zum Gleichspannungs-Netzwerk erfolgt.

Ausgleichsströme durch Spannungsunterschiede zwischen der Eingangsschaltung und dem Gleichspannungs-Netzwerk können den Trennschalter zerstören oder wiederum die Schmelzsicherung unbeabsichtigt auslösen. Vorteilhaft umfasst der Stromrichter eine Vorladeschaltung, mit der der Strom in oder aus der Eingangsschaltung begrenzt werden kann. Die Vorladeschaltung kann einen Vorladewiderstand umfassen, der in Serie zu den Eingangs-Kondensatoren geschaltet ist. Parallel zum Vorladewiderstand kann ein Überbrückungselement, insbesondere ein Relais geschaltet sein. Die Steuerung kann ausgestaltet sein, das Relais nur für die Dauer der Vorladung, also bei einer ausreichend hohen Differenz der Spannungen in der Eingangsschaltung und im Gleichspannungs-Netzwerk abzuschalten, sodass der Strom den Vorladewiderstand passieren muss.

Sollte die Spannung in der Eingangsschaltung kleiner als die Spannung im Gleichspannungs-Netzwerk sein, dann werden die Eingangs-Kondensatoren über die intrinsische Diode des Leistungshalbleiterschalters im Trennschalter nachgeladen. Ist die Spannung in der Eingangsschaltung kleiner als die Spannung im Gleichspannungs-Netzwerk, wird zweckmäßig der Trennschalter eingeschaltet, ggfs. mit zugeschaltetem Vorladewiderstand, um einen Spannungsausgleich zu erzielen oder die bereits beschriebene Entladeschaltung verwendet.

Im Folgenden wird die Erfindung anhand der in den Figuren dargestellten Ausführungsbeispiele näher beschrieben und erläutert. Es zeigen:
Figur 1 ein Gleichspannungs-Netzwerk mit zwei Gleichspannungs-Sektoren und mehreren Stromrichtern mit unterschiedlichen Anschlussleistungen,
Figur 2 ein Schaltbild eines Stromrichters.

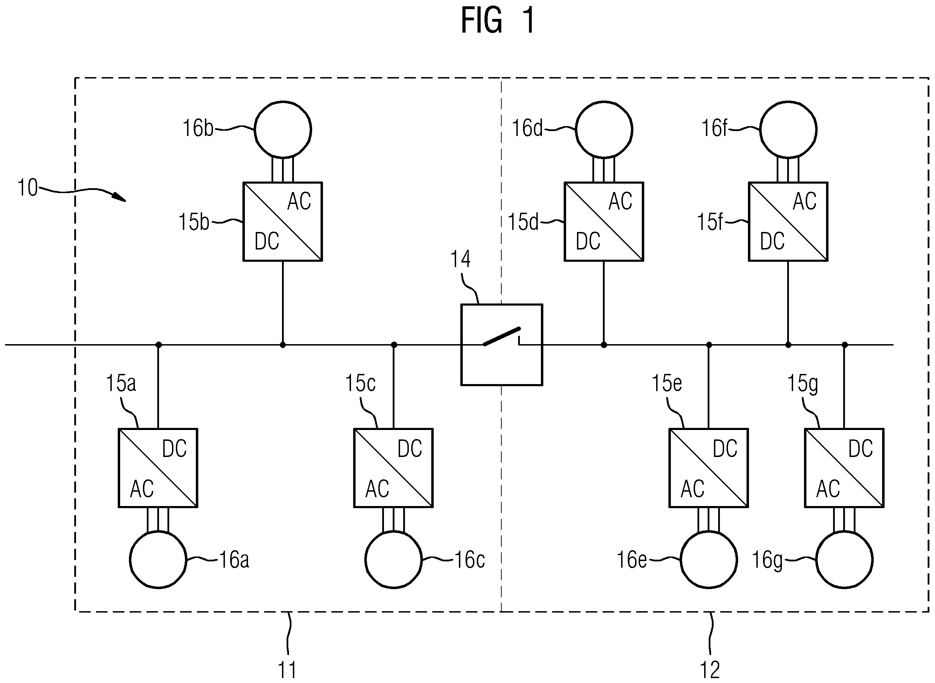

Figur 1 zeigt ein beispielhaftes Gleichspannungs-Netzwerk 10. Das Gleichspannungs-Netzwerk 10 ist in diesem Beispiel ein Versorgungsnetzwerk für Maschinen in einer Fabrikhalle. Es verwendet in diesem Beispiel eine Nennspannung von 800 V. Es umfasst weiterhin zwei Sektoren 11, 12, an deren Schnittstelle ein DC-Schalter 14 angeordnet ist. Der DC-Schalter 14 kann eine Trennung der Sektoren 11, 12 bewirken, wenn in einem der Sektoren ein Fehler auftritt und ein dadurch bewirkter Spannungsabfall detektiert wird.

In jedem der Sektoren 11, 12 ist eine Mehrzahl von Stromrichtern 15a... g an das Gleichspannungs-Netzwerk 10 angeschlossen. Die Stromrichter 15a...g versorgen jeweils eine ihnen zugeordnete Last 16a...g. Die Lasten 16a...g können beispielsweise elektrische Maschinen, also Elektromotoren sein.

Die Lasten 16a...g haben in diesem Beispiel teilweise voneinander verschiedene Nennleistungen. So haben die Lasten 16a, d in diesem Beispiel eine Nennleistung von 10 kW, die Lasten 16b, e, g eine Nennleistung von 5 kW und die Lasten 16c, f eine Nennleistung von 50 kW.

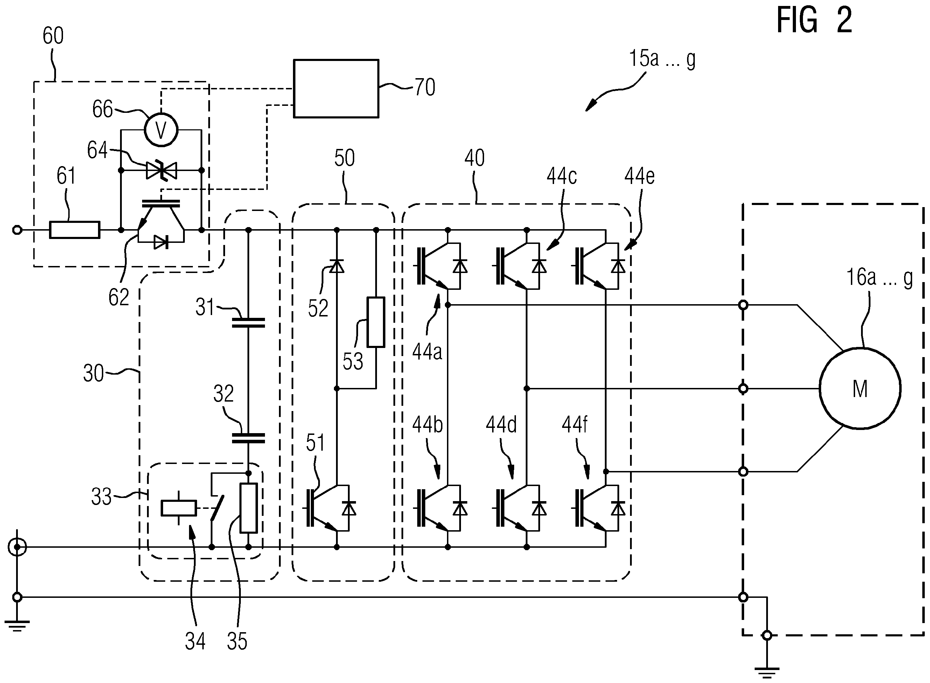

Figur 2 zeigt einen Stromrichter 15a...g gemäß einem Ausführungsbeispiel für die Erfindung. Der Stromrichter 15a...g umfasst Gleichspannungsanschlüsse 21, 22 und Wechselspannungsanschlüsse 23, 24, 25. Die Gleichspannungsanschlüsse 21, 22 sind mit dem in Figur 2 nicht dargestellten Gleichspannungs-Netzwerk 10 verbunden. Die Wechselspannungsanschlüsse 23, 24, 25 sind mit einer Last 16a...g, hier einem Elektromotor, verbunden.

Der Stromrichter 15a...g umfasst eine Eingangsschaltung 30, der in diesem Beispiel eine Reihenschaltung von zwei Eingangs-Kondensatoren 31, 32 und einer Vorladeschaltung 33 umfasst. Die Vorladeschaltung ist eine Parallelschaltung eines Relais 34 und eines Vorladewiderstands 35. Der negative Pol der Eingangsschaltung 30 bildet den negativen Gleichspannungsanschluss 22.

Parallel zur Eingangsschaltung 30, d.h. zwischen ihrem negativen und positiven Pol geschaltet, weist der Stromrichter 15a...g eine Wechselrichter-Schaltung 40 auf. Die Wechselrichter-Schaltung 40 umfasst drei parallel zueinander geschaltete Halbbrücken 41, 42, 43 auf, die jeweils eine Serienschaltung eines oberen und einen unteren Leistungshalbleiterschalter, hier IGBTs 44a...f, aufweisen. Die Knotenpunkte zwischen einem jeweiligen oberen und unteren IGBT 44a...f bilden die Wechselspannungsanschlüsse des Stromrichters 15a...g.

Ebenfalls parallel zur Eingangsschaltung 30, d.h. zwischen ihren negativen und positiven Pol geschaltet, weist der Stromrichter 15a...g eine Entladeschaltung 50 auf, die eine Serie aus einem Entladeschalter 51 und einer Parallelschaltung einer Diode 52 und eines Entladewiderstands 53 ist.

Zwischen dem positiven Pol der Eingangsschaltung 30 und dem positiven Gleichspannungsanschluss 21 ist eine Schutzschaltung 60 angeordnet. Die Schutzschaltung 60 umfasst eine Serienschaltung einer Schmelzsicherung 61 und eines Trennschalters, der in diesem Beispiel durch einen IGBT 62 gebildet ist.

Der IGBT 62 ist derart angeordnet, dass er vom positiven Pol der Eingangsschaltung 30 in Richtung zum Gleichspannungs-Netzwerk 10 fließende Ströme abschalten und blockieren kann. Ströme dieser Richtung können als Rückspeiseströme bezeichnet werden, da sie nicht der Versorgung der angeschlossenen Last 16a...g dienen, sondern einen Leistungsfluss von der Last 16a... g weg bewirken.

Ströme in der Gegenrichtung, also aus dem Gleichspannungs-Netzwerk 10 durch die Schutzschaltung 60 in die Eingangsschaltung 30, versorgen die Last 16a...g und entsprechen somit dem Standardbetriebszustand des Stromrichters 15a... g. Solche Speiseströme können vom IGBT 62 nicht gesperrt werden, sondern werden von der ihm parallelgeschalteten Rückwärtsdiode durchgeleitet.

Parallel zum IGBT 62 im Trennschalter ist eine bidirektionale TVS-Diode 64 (Suppressordiode) angeordnet. Diese stellt einen Überspannungsschutz für den IGBT 62 bereit. Bildet sich in einem Betriebszustand eine Spannung über den IGBT 62 aus, die diesen zerstören könnte, wird die TVS-Diode 64 leitend und erlaubt dadurch kein weiteres Anwachsen der Spannung über den IGBT 62.

Eine Einrichtung 66 zur Spannungsmessung ist ebenfalls parallel zum IGBT 62 angeordnet. Einrichtung 66 zur Spannungsmessung verwendet somit den Durchlasswiderstand des IGBT 62 als Messwiderstand und bestimmt dadurch die über den IGBT 62 abfallende Spannung.

Der Stromrichter 15a...g umfasst schließlich eine Steuerung 70 zur Ansteuerung der jeweiligen Steuerkontakte (Gate) der Leistungshalbleiterschalter, also hier der IGBTs 44a...f, 62. Die Einrichtung 66 zur Spannungsmessung ist ebenfalls mit der Steuerung 70 verbunden. Die Steuerung kann in Kontakt mit übergeordneten Steuereinrichtungen stehen, die beispielsweise Vorgaben zur Steuerung der jeweiligen Last 16a...g an die Steuerung 70 geben und Messwerte von dieser entgegennehmen.

Im Standardbetrieb, d.h. bei zugeschalteter Last und geringem Unterschied zwischen der Spannung im Gleichspannungs-Netzwerk 10 und in der Eingangsschaltung 30 hält die Steuerung 70 den IGBT 62 im eingeschalteten Zustand. Ein Wechsel zwischen den Leistungsflussrichtungen ist dadurch jederzeit möglich, ohne dass ein Eingriff bezüglich des IGBT 62 nötig ist.

Im Falle eines Fehlers (Kurzschlusses) innerhalb des Stromrichters 15a...g selbst, der zu einem hohen Stromfluss in den Stromrichter 15a...g hinein führt, unterbricht die Schmelzsicherung den Stromfluss. Der Trennschalter, also der IGBT 62 sperrt einen solchen Strom unabhängig von seinem Schaltzustand nicht.

Tritt jedoch ein Fehler in einem der anderen Stromrichter 15a...g auf, speziell in einem mit einer höheren Nennleistung als dem betrachteten Stromrichter 15a...g, dann fällt die Spannung im Gleichspannungs-Netzwerk 10 ab und es ergibt sich ein Stromfluss aus der Eingangsschaltung 30 in das Gleichspannungs-Netzwerk 10, analog zu einem Rückspeisestrom. Durch die Spannungsmessung mit der Einrichtung 66 kann die Steuerung 70 feststellen, dass die Spannung über den IGBT 62 und damit der dazu proportionale Strom durch den IGBT 62 einen festgelegten Schwellwert überschreitet.

Dieser Schwellwert gilt nur für diese Stromrichtung, nicht aber für einen Strom in den Stromrichter 15a...g hinein. Mit anderen Worten wird also das Vorzeichen der Spannung beachtet. Wird der Schwellwert überschritten, wird der IGBT 62 abgeschaltet und dadurch der Stromfluss aus dem Stromrichter 15a...g unterbrochen. Der Schwellwert ist so gewählt, dass das Unterbrechen des Stromflusses so passiert, dass die Schmelzsicherung nicht auslöst. Damit wird verhindert, dass ein außerhalb eines betrachteten Stromrichters 15a...g liegender Fehler dessen Schmelzsicherung auslöst.

Ist der IGBT 62 abgeschaltet, kann keine Rückspeisung von überschüssiger Energie aus der Last 16a...g stattfinden. Fällt solche überschüssige Energie trotzdem an, wird die Entladeschaltung 50 verwendet, um die Energie abzubauen. Dazu wird der Entladeschalter 51 eingeschaltet. Dies passiert zweckmäßig getaktet, um den Leistungsabbau zu kontrollieren. Dadurch wird ein gesteuerter Freilaufkreis über den Entladewiderstand 53 geschaffen, der die anfallende Energie in Wärme und dadurch für den Abbau sorgt.

Der IGBT 62 bleibt abgeschaltet, solange die Spannung im Gleichspannungs-Netzwerk 10 kleiner als die Spannung in der Eingangsschaltung 30 ist, also U_{DC} < Uᵢₙ. Ein Einschalten kann in einer Ausgestaltung dann erfolgen, wenn U_{DC} >= Uᵢₙ und Uᵢₙ in einem erlaubten Spannungsbereich liegt. Der erlaubte Spannungsbereich hängt von der Ausgestaltung des Stromrichters 15a...g ab und kann beispielsweise ein Bereich von 620 V bis 780 V sein.

Ein weiterer Betriebszustand, in dem IGBT 62 ausgeschaltet wird, ist die Vorladung der Kondensatoren 31, 32 der Eingangsschaltung 30. Diese passiert, um die Spannung der Kondensatoren 31, 32 von einer geringeren Spannung auf annähernd die Spannung des Gleichspannungs-Netzwerks 10 zu bringen. Hierzu wird die Vorladeschaltung verwendet und durch Abschalten des Relais 34 der Vorladewiderstand in den Strompfad eingebracht und dadurch der in die Kondensatoren 31, 32 fließende Strom begrenzt. Ist Uᵢₙ ≈ U_{DC} und Uᵢₙ auch im erlaubten Spannungsbereich, wird der IGBT 62 eingeschaltet und der Normalbetrieb aufgenommen.

### Bezugszeichen

- 10: Gleichspannungs-Netzwerk
- 11, 12: Sektoren des Gleichspannungs-Netzwerks
- 14: DC-Schalter
- 15a...g: Stromrichter
- 16a...g: Last
- 21, 22: Gleichspannungsanschlüsse
- 23, 24, 25: Wechselspannungsanschlüsse
- 30: Eingangsschaltung
- 31, 32: Eingangs-Kondensatoren
- 33: Vorladeschaltung
- 34: Relais
- 35: Vorladewiderstand
- 40: Wechselrichterschaltung
- 41, 42, 43: Halbbrücken
- 44a... f: IGBTs
- 50: Entladeschaltung
- 51: Entladeschalter
- 52: Diode
- 53: Entladewiderstand
- 60: Schutzschaltung
- 61: Schmelzsicherung
- 62: IGBT
- 64: TVS-Diode
- 66: Einrichtung zur Spannungsmessung
- 70: Steuerung

## Patentansprüche

1. Stromrichter (15a...g) zur Wandlung zwischen einer an Gleichspannungsanschlüssen (21, 22) anliegenden Gleichspannung und einer an Wechselspannungsanschlüssen (23, 24, 25) anliegenden Wechselspannung, umfassend
- eine Eingangsschaltung (30) mit einem oder mehreren Eingangs-Kondensatoren (31, 32), wobei deren negativer Pol mit dem negativen Gleichspannungs-Anschluss (22) des Stromrichters verbunden ist,
- eine parallel zur Eingangsschaltung (30) angeordnete Wechselrichter-Schaltung (40) mit einer Mehrzahl von steuerbaren Leistungshalbleiterschaltern (44a...f), wobei die Wechselrichter-Schaltung (40) mit den Wechselspannungsanschlüssen (23, 24, 25) gekoppelt ist,
- eine Schutzschaltung (60) mit einer Schmelzsicherung (61) zwischen dem positiven Pol der Eingangsschaltung (30) und dem positiven Gleichspannungsanschluss (21), wobei die Schutzschaltung (60) in Serie zur Schmelzsicherung (61) einen Trennschalter (62) aufweist, der ein steuerbarer Leistungshalbleiterschalter ist.

2. Stromrichter (15a...g) nach Anspruch 1, bei dem die Schutzschaltung (60) eine Steuerung (70) für den Trennschalter (62) aufweist, die ausgestaltet ist, den Trennschalter (62) abzuschalten, wenn ein von der Eingangsschaltung (30) zum Gleichspannungsanschluss (21) fließender Strom einen Schwellwert überschreitet.

3. Stromrichter (15a...g) nach Anspruch 2, bei dem die Steuerung (70) ausgestaltet ist, den Trennschalter (62) im Betrieb des Stromrichters (15a...g) im eingeschalteten Zustand zu belassen, wenn der Strom den Schwellwert nicht überschreitet.

4. Stromrichter (15a...g) nach Anspruch 2 oder 3, bei dem die Steuerung (70) ausgestaltet ist, den Trennschalter (62) im Betrieb des Stromrichters (15a...g) abzuschalten, wenn eine Vorladung der Eingangs-Kondensatoren (31, 32) der Eingangsschaltung (30) stattfindet.

5. Stromrichter (15a...g) nach einem der vorangehenden Ansprüche, der eine Einrichtung (66) zur Bestimmung des Stroms durch den Trennschalter (62) aufweist.

6. Stromrichter (15a...g) nach Anspruch 5, bei dem die Einrichtung (66) zur Bestimmung des Stroms durch den Trennschalter (62) eine Spannungsmess-Einrichtung (66) umfasst, wobei die Spannungsmess-Einrichtung (66) derart angeordnet ist, dass ein Spannungsabfall über den Trennschalter (62) ermittelt wird.

7. Stromrichter (15a...g) nach einem der vorangehenden Ansprüche mit einer Überspannungs-Schutzeinrichtung (64) für den Trennschalter (62), insbesondere einer parallel zum Trennschalter angeordneten TVS-Diode (64) oder einem parallel zum Trennschalter (62) angeordneten Varistor.

8. Stromrichter (15a...g) nach einem der vorangehenden Ansprüche mit einer Entladeschaltung (50), die parallel zur Eingangsschaltung (30) geschaltet ist, wobei die Entladeschaltung (50) einen steuerbaren Leistungshalbleiterschalter (51) in Serie zu einem Entladewiderstand (53) umfasst.

9. Betriebsverfahren für einen Stromrichter (15a...g) nach einem der vorangehenden Ansprüche, bei dem der Trennschalter (62) dauerhaft eingeschaltet ist und abgeschaltet wird, wenn ein von der Eingangsschaltung (30) zum Gleichspannungsanschluss (21) fließender Strom einen Schwellwert überschreitet.

10. Betriebsverfahren nach Anspruch 9, bei dem der Trennschalter (62) für eine Vorladung der Eingangs-Kondensatoren (31, 32) der Eingangsschaltung (30) abgeschaltet wird.
